# EUROPÄISCHE PATENTSCHRIFT

(11) **EP 2 055 733 B1**
(45) Veröffentlichungstag und Bekanntmachung des Hinweises auf die Patenterteilung: **12.05.2010**
(21) Anmeldenummer: 07021384.8
(22) Anmeldetag: 02.11.2007
(51) Int. Cl.: C08K 3/22, C09D 13/00

(54) **Mine**
Lead
Mine

(43) Veröffentlichungstag der Anmeldung: 06.05.2009
(73) Patentinhaber: Faber-Castell AG, 90547 Stein (DE)
(72) Erfinder: Lugert, Gerhard, Dr., 90431 Nürnberg (DE); Krasnikov, Nikolaj, 90513 Zirndorf (DE); Appel, Reiner, 90522 Oberasbach (DE)
(74) Vertreter: Mörtel & Höfner

(56) Entgegenhaltungen:
- EP-A- 0 636 668
- DD-A1- 239 213
- GB-A- 1 212 469
- US-A- 4 212 676
- DATABASE WPI Week 199311 Derwent Publications Ltd., London, GB; AN 1993-088435 XP002471969 -& JP 05 032098 A (PENTEL KK) 9. Februar 1993 (1993-02-09)

## Beschreibung

Die Erfindung betrifft eine Mine und einen mit einer solchen Mine ausgestatteten Stift. Seit langer Zeit ist es bekannt, Linien oder Flächen auf Zeichen- Mal- und Schreibuntergründen, beispielsweise auf weißem Papier, mit Hilfe von Korrekturflüssigkeiten zu überdecken, um etwa Fehler in Texten oder Zeichnungen zu korrigieren bzw. zu retuschieren. Die Flüssigkeiten enthalten üblicherweise neben Titandioxid, das hauptsächlich für die Überdeckung verantwortlich ist, ein organisches Lösemittel oder Wasser, das mit geringfügigen Zusätzen von organischen Lösemitteln versetzt ist, sowie Additive. Die in Behältern aufbewahrten Korrekturflüssigkeiten werden meist mit Hilfe von Applikationselementen wie Pinseln oder Schwämmchen auf die Unterlage aufgetragen, die an einem Behälterverschluss, etwa einer Schraubkappe fixiert sind. Nachteilig dabei ist zunächst, dass mit dem Applikationselement oft mehr Flüssigkeit aus dem Behälter entnommen wird, als zur Korrektur benötigt wird oder dass Flüssigkeit vom Applikationselement abtropft. Machteilig ist weiterhin, dass die Flüssigkeiten, insbesondere wenn der Behälter beim Gebrauch längere Zeit geöffnet ist, relativ schnell eintrocken und dann schwer auf der Unterlage zu verteilen sind oder zu dicke Aufträge ergeben. Weiterhin haben die Flüssigkeiten, insbesondere solche auf Wasserbasis, die Eigenschaft, dass sie bestimmte Farbstoffe auflösen, so dass der Farbstoff einer überdeckten Beschriftung den mit der Flüssigkeit erzeugten Deckfilm verfärbt. Nachteilig sind schließlich Lösemittelemissionen und besonders die damit verbundene Geruchsbelästigung des Verwenders.

Vielfach werden Behälter in der Form eines Schreibgerätes verwendet, die zwar im Hinblick auf die Handhabung verbessert sind, dafür aber andere Nachteile mit sich bringen. Die Geräte weisen eine Applikationsspitze auf, die etwa bei Druck auf den flexibel gehaltenen Behälter Korrekturflüssigkeit abgibt. Trotz mechanischer Abdichtungen etwa in Form einer Verschlusskugel trocknen die Applikationsspitzen nach Entfernung einer sie während Lagerung und Transport abdichtenden Versiegelung insbesondere bei nur sporadischem Gebrauch sehr schnell aus. Außerdem sind derartige Geräte vor allem wegen ihrer aufwändigen Applikationsspitze relativ aufwändig in der Herstellung und daher teuer.

Die mit den genannten Korrekturflüssigkeiten verbundenen Nachteile werden mit Applikationsgeräten vermieden, die mit Korrekturbändern arbeiten. Die Bänder weisen eine Füllstoffe und Pigmente wie Titanweiß enthaltende Deckbeschichtung auf und sind mit Hilfe einer komplizierten Abrollmechanik auf der Unterlage abrollbar, wobei die Deckbeschichtung an der Unterlage haften bleibt. Dabei entsteht zwar ein homogener und glatter Deckfilm, aber nur bei geradliniger Abrollrichtung. Bei einer gekrümmten Abrollbahn entstehen an den Konkavseiten des Deckfilms aufgrund von Materialanhäufungen Falten. Außerdem ist die Abrollmechanik störanfällig. So können die Korrekturbänder reißen, wodurch das gesamte Gerät unbrauchbar wird. Außerdem neigen die vorhandenen Abroll-Mechaniken in vielen Fällen dazu, bei der Applikation zu blockieren. Auch ist es schwer möglich genaue Korrekturen vorzunehmen. Manche der aufgetragenen Deckfilme neigen nach mehreren Wochen dazu, zu vergilben.

Aufgabe der Erfindung ist es, eine Korrektur der eingangs genannten Art ohne die erwähnten Nachteile zu ermöglichen.

Diese Aufgabe wird durch eine Mine nach Anspruch 1 bzw. ein eine solche Mine enthaltendes Schreibgerät nach Anspruch 12 gelöst.

Der Erfindung lag dabei zunächst die Erkenntnis zugrunde, dass eine Mine mit einer herkömmlichen, Buntstiften entsprechenden Konsistenz als Grundlage dienen könnte, wenn diese deckende Pigmente, beispielsweise weiße Pigmente wie TiO₂, ZnO, Mg0 oder Lithopone enthält. Lithopone ist eine Mischung bzw. ein Co-Präzipität aus ZnS und BaSO₄. Dabei zeigte sich, dass bei herkömmlichen Minen, insbesondere bei Wachsminen, die hinsichtlich ihres Abstrichverhaltens am erfolgversprechendsten schienen, trotz hoher Anteile an Farbpigmenten keine deckenden Abstriche auf Papierunterlagen erzeugt werden konnten. Auch führte eine Variation der herkömmlichen Wachsbestandteile oder in der Minenmasse enthaltener Füllstoffe zu keinem Erfolg. Völlig überraschend war dann, dass mit Wachsminen mit 1 Gew.% bis 30 Gew.% wenigstens eines Polyolefinwachses bei einem Anteil an Pigmenten, insbesondere von Weißpigmenten wie Titanweiß oder Lithopone, von 30 Gew.% bis 70 Gew.% deckende Abstriche vor allem auf Papierunterlagen erzeugt werden können. Die Abstriche weisen eine hohe Deckkraft auf, sind dauerhaft, lösen den Farbstoff von damit überdeckten Beschriftungen nicht an, und sind außerdem lösemittel- und daher geruchsfrei. Außerdem sind die Minen ohne Einbuße ihrer Gebrauchseigenschaften lange lagerfähig. Eine Mine und ein eine Mine enthaltendes Schreibgerät, etwa ein holz- oder kunststoffummantelter Stift, sind sehr einfach und effizient handhabbar. Es lassen sich damit sowohl punktgenaue Korrekturen vornehmen als auch größere Flächenbereiche einer Unterlage mit einem hochdeckenden, mit herkömmlichen Korrekturflüssigkeiten vergleichbaren Auftrag versehen. Die deckenden Aufträge sind mit herkömmlichen Schreibgeräten überschreibbar. Im Falle eines weißen Untergrunds ergeben die bereits oben erwähnten Weißpigmente Aufträge mit einem hohen Weißgrad. Mit Weißgrad wird das (weiße) Aussehen einer weißen Beschichtung bezeichnet. Er ist als das Reflexionsvermögen einer weißen Oberfläche im Vergleich etwa zu einem Weißstandard definiert und kann mit Hilfe eines Spektralphotometers bestimmt werden. Zur Abtönung eines Weißfarbtons können geringe Mengen an Blaufarbstoff oder -Pigment zum Einsatz kommen wie z. B. Ultramarinblau. Es ist auch möglich farbige Minen herzustellen. Beispielsweise für Korrekturen auf gelbem Schreibpapier kann die gewünschte Korrekturfeststoffmine mit Gelb- oder Orange-Pigmenten eingefärbt bzw. getönt sein.

Ein gutes Deckverhalten wird erzielt, wenn die Minen den oben angegebenen Anteil an Polyolefinwachs enthalten. Unterhalb von 1 Gew.% ist ein deckender Effekt von Polyolefinwachsen nicht mehr zu beobachten. Ab einem Gehalt ab 5 Gew. % wird eine gute Deckung erreicht, wobei hinsichtlich des Anteils an Pigmenten ein relativ großer Spielraum besteht. Ein Anteil von mehr als 30 Gew.% Polyolefinwachs bringt keine weitere Erhöhung der Deckkraft. Auch wird bei hohen Gehalten an Polyolefinwachsen die Mine relativ fest, wodurch sich das Abstrichverhalten der Mine verschlechtert. Grundsätzlich sind Polyolefinwachse mit Schmelzbereichen zwischen etwa 50 °C und 130 °C geeignet, wobei vor allem Polyolefinwachse aus der Gruppe Polyethylenwachs (CAS 9002-88-4), Polypropylenwachs (CAS 9003-07-0), Propylen-Ethylen-Copolymer-Wachs (9003-07-0), PP-Copolymer-Wachs (CAS 31069-12-2), Ethylene-1-propen Copolymer (CAS 9010-79-1), oder Ethylen-1-propen-polymer (CAS 9003-07-0), jeweils alleine oder in Mischungen in Frage. Hervorzuheben sind dabei Polyethylenwachs, Polypropylenwachs und Propylen-Ethylen-Copolymer-Wachs, mit denen besonders gut deckende Minen herstellbar sind. Die beiden letztgenannten Wachse enthaltende Aufträge sind besonders gut überschreibbar.

Das Abstrichverhalten sowie in gewissem Rahmen auch die Konsistenz der Minen lassen sich durch die bei Wachsminen üblichen wachs- und fettartigen Bestandteile wie Weichwachse auf der Basis von Fett- und Weichwachssäuren wie Castoröl, Fett- und Weichwachsglyceride, Wachsalkohole, Wachsester, langkettige verzweigte und unverzweigte Kohlenwasserstoffe, gehärtete Wachse, also beispielsweise Ester von Montansäuren, Stearinsäure, Palmitinsäure, Castorwachs und Paraffinwachs in weiten Bereichen variieren. In dieser Hinsicht sind auch Gleitmittel zu nennen, die insbesondere gewährleisten, dass beim Abstreichen der Mine auf einer Unterlage eine ausreichende Menge an Minenmasse haften bleibt, was für die Deckfähigkeit der Aufträge wichtig ist. Als Gleitmittel sind die bei Wachsminen üblichen Fettsäuresalze wie Calciumstearat, Magnesiumstearat und Zinkstearat mit einem Anteil von 3 Gew.% bis 25 Gew.% enthalten. Wachsminen der in Rede stehenden Art sind wasserunlöslich. Eine Wasserlöslichkeit kann aber durch Zusatz von Emulgatoren bewirkt werden, wobei sich dabei auch der Einsatz wasserlöslicher Gleitmittel wie Natriumstearat empfiehlt. Unter dem Begriff Wachsminen sind auch solche Minen zu verstehen, die einen geringen Anteil eines wasserquellbaren Bindemittels wie Natriumcarboxymethylcellulose enthalten.

Ein weiterer wichtiger Bestandteil der Minen sind Füllstoffe. Diese wirken sich positiv auf das Abstrichverhalten aus, indem sie einer Verfestigung der Mine durch harte Wachse, vor allem Polyolefinwachse, entgegenwirken. Es kommen vor allem anorganische Füllstoffpartikel, insbesondere Calciumcarbonat, Glimmer, Kaolin, Specksteinmehl und Talkum, jeweils alleine oder in Mischung mit einem anderen der genannten Füllstoffe in Frage. Unterhalb eines Füllstoffanteils von 15 Gew.% sind die Minen in der Regel zu hart, wodurch sich zu wenig Material auf einer Unterlage abstreichen lässt. Oberhalb von 30 Gew.% Füllstoffen besteht die Gefahr, dass ein für eine problemlose Handhabung der Mine ausreichender Zusammenhalt der Minenmasse nicht mehr gegeben ist, so dass z.B. die Minen beim Andrücken an eine Unterlage abbrechen.

### Beispiel 1

| | |
|---|---|
| Talkum | 23,0 Gew. % |
| Magnesiumstearat | 10,0 Gew. % |
| Titandioxid | 40,0 Gew. % |
| Ester von Montansäuren | |
| (CAS 73 138-45-1) | 6,0 Gew. % |
| Stearinsäure | 13,0 Gew. % |
| Polyethylenwachs | |
| (CAS 9002-88-4) | 8,0 Gew. % |

### Beispiel 2.

| | |
|---|---|
| Kaolin | 21,98 Gew. % |
| Magnesiumstearat | 10,00 Gew. % |
| Ultramarinblau | 0,02 Gew. % |
| Titandioxid | 40,00 Gew. % |
| Polycerinhydro RD 907 | 5,00 Gew. % |
| (Hersteller: Th. C. Tromm GmbH, D-50735 Köln) | |
| Propylen-Ethylen-Copolymer-Wachs | |
| (CAS 9010-79-1) | 14,00 Gew. % |
| Castorwachs | 9,00 Gew. % |

### Beispiel 3:

| | |
|---|---|
| Kaolin | 21,98 Gew. % |
| Calciumstearat | 10,00 Gew. % |
| Ultramarinblau | 0,02 Gew. % |
| Titandioxid | 40,00 Gew. % |
| Ester von Montansäuren | |
| (CAS 73138-45-1) | 5,00 Gew. % |
| Propylen-Ethylen-Copolymer-Wachs | |
| (CAS 9010-79-1) | 14,00 Gew. % |
| Stearinsäure | 9,00 Gew. % |

Es handelt sich bei den Ausführungsbeispielen um Minenmassen für weiße Korrekturminen, wobei im Falle von Beispiel 2 und 3 Ultramarinblau zur Abtönung enthalten ist. Die Ausgangsstoffe werden mit Mischern oder Knetern vermengt und die so erhaltene Minenmasse mit einer Strangpresse oder einem Extruder zu Minen mit einem Durchmesser von 6 mm ausgeformt.

### Vergleichsbeispiel:

| | |
|---|---|
| Titandioxid | 40,0 Gew. % |
| Kaolin | 25,0 Gew. % |
| Montanwachs | 10,0 Gew. % |
| Japanwachs Original | 20,0 Gew. % |
| Stearinsäure | 5,0 Gew. % |

Es handelt sich hier um eine herkömmliche Wachsminenmasse für weiße Minen.

Minen entsprechend den Beispielen 1 bis 3 wurden im Vergleich zu einer handelsüblichen Korrektur-flüssigkeit und einer dem Vergleichsbeispiel entsprechenden Mine mit einem Durchmesser von 4 mm (Referenzbeispiel WR1) getestet. Hierzu wurden vollständig schwarze Felder mit einem Tintenstrahldrucker HP DeskJet 990 CXi auf weißem Papier erzeugt. Jeweils ein Feld wurde mit dem Referenzfarbstift WR 1, einer handelsüblichen Korrekturflüssigkeit sowie den Minen gemäß den Beispielen 1 - 3 überstrichen.

Eine Auswertung der Ergebnisse erfolgte mit dem Farbmessgerät Mercury - Cielab der Firma Datacolor (Dietlikon,CH). Ermittelt wurden hierbei die Weißwerte ΔL gegenüber einem mit dem genannten Drucker erzeugten schwarzen Hintergrund (ΔL = 0).

| Papier weiß überstrichen mit | Ausdruck Ink Jet Drucker: Feld schwarz ohne Überma lung | Schwarzes Feld überstrichen mit Referenzfarbstift WR 1 | Schwarzes Feld überstrichen mit handelsüblicher Korrekturflüssigkeit | Schwarzes Feld überstrichen mit Korrekturmine Beispiel 1 | Schwarzes Feld überstrichen mit Korrekturmine Beispiel 2 | Schwarzes Feld überstrichen mit Korrekturmine Beispiel 3 | Kopierpapier weiß unbehandelt, nicht bedruckt, nicht überstrichen |
|---|---|---|---|---|---|---|---|
| Δ L | 0,0 | 23,1 | 61,6 | 62,2 | 63,3 | 65,8 | 69,0 |

Aus den so erhaltenen Werten ergibt sich eindeutig, dass die erfindungsgemäßen Minen (Beispiele 1-3) signifikant bessere Ergebnisse in Bezug auf das Deckvermögen aufzeigen, als herkömmliche weiße Farbstiftminen (WR 1). Die Ergebnisse sind sogar geringfügig besser als bei handelsüblichen Korrekturflüssigkeiten. Die Referenzmine zeigte nur ein mangelhaftes Deckvermögen. Da die Referenzmine und die erfindungsgemäßen Minen jeweils eine vergleichbare Minenmasse auf Wachsbasis und vergleichbare Weißpigmente aufweisen, wird deutlich, dass die Ursache für das erheblich verbesserte Deckvermögen die Polyolefinwachse sind.

### Beispiel 4:

| | |
|---|---|
| Talkum | 20,00 Gew. % |
| Zinkstearat | 5,00 Gew. % |
| Zinkoxid | 35,00 Gew. % |
| Pigment Yellow 81 | |
| (CI 21127) | 0,50 Gew. % |
| Polyethylen-Wachs | 20,00 Gew. % |
| Paraffin-Wachs | |
| (Schmelzbereich 60-65°C) | 19,50 Gew. % |

Die Minenmasse ist gelb eingefärbt und eignet sich besonders für die Herstellung von dickeren Minen, etwa von hochdeckenden Wachsmalkreiden mit einem Durchmesser von 12 mm. Die Herstellung erfolgt entsprechend Beispiel 1 bis 3, wobei die Minen vor dem Gebrauch angespitzt werden. An diesem Beispiel wird deutlich, dass eine erfindungsgemäße Mine nicht nur als Korrekturmine sondern auch für Malzwecke, entweder in der Form einer Wachsmalkreide oder in ummantelter Form, verwendet werden kann.

## Patentansprüche

1. Mine mit einer Minengrundmasse auf Wachsbasis, wobei die Mine 30 Gew.% bis 70 Gew.% wenigstens eines Weißpigments, 5 Gew.% bis 30 Gew.% wenigstens eines Polyolefinwachses, 15 Gew.% bis 30 Gew.% eines Füllstoffes, 3 Gew.% bis 25 Gew.% eines Fettsäuresalzes, sowie einen wachs- und/oder fettartigen Bestandteil aus der Gruppe Stearinsäure, Montansäure, Fett- und Weichwachsglycerid, Wachsalkohole, Wachsester, Ester einer Montansäure, Castoröl, Palmitinsäure enthält.

2. Mine nach Anspruch 1,
**dadurch gekennzeichnet,**
**dass** 5 Gew.% bis 20 Gew. % Polyolefinwachs enthalten sind.

3. Mine nach Anspruch 1 oder 2,
**dadurch gekennzeichnet,**
**dass** 35 Gew.% bis 60 Gew.% Pigmente enthalten sind.

4. Mine nach einem der vorhergehenden Ansprüche,
**dadurch gekennzeichnet,**
**dass** wenigstens ein Polyolefinwachs aus der Gruppe Polyethylenwachs, Polypropylenwachs, Polyethylen-Polypropylen-Copolymerwachs enthalten ist.

5. Mine nach einem der vorhergehenden Ansprüche,
**dadurch gekennzeichnet,**
**dass** sie als Pigment Titanoxid und/oder Lithopone enthält.

6. Mine nach einem der vorhergehenden Ansprüche,
**gekennzeichnet durch**
wenigstens einen Füllstoff aus der Gruppe Kaolin, Calciumcarbonat, Specksteinmehl, Glimmer, Talkum.

## Claims

1. Lead with a lead basic mass based on wax, where the lead comprises 30% by weight to 70% by weight of at least one white pigment, 5% by weight to 30% by weight of at least one polyolefin wax, 15% by weight to 30% by weight of a filler, 3% by weight to 25% by weight of a fatty acid salt, and also a wax-like and/or fat-like constituent from the group consisting of stearic acid, montanic acid, fatty and soft wax glyceride, wax alcohols, wax esters, esters of a montanic acid, castor oil, palmitic acid.

2. Lead according to Claim 1,
**characterized in that**
5% by weight to 20% by weight of polyolefin wax are present.

3. Lead according to Claim 1 or 2,
**characterized in that**
35% by weight to 60% by weight of pigments are present.

4. Lead according to one of the preceding claims,
**characterized in that**
at least one polyolefin wax from the group consisting of polyethylene wax, polypropylene wax, polyethylene-polypropylene copolymer wax is present.

5. Lead according to one of the preceding claims,
**characterized in that**
it comprises titanium oxide and/or lithopones as pigment.

6. Lead according to one of the preceding claims,
**characterized by**
at least one filler from the group consisting of kaolin, calcium carbonate, soapstone powder, mica, talc.

## Revendications

1. Mine ayant une composition de base à base de cire, la mine contenant de 30 % en poids à 70 % en poids d'au moins un pigment blanc, de 5 % en poids à 30 % en poids d'au moins une cire polyoléfinique, de 15 % en poids à 30 % en poids d'une charge et 3 % en poids à 15 % en poids d'un sel d'acide gras, ainsi qu'un constituant de type cire et/ou graisse choisi dans le groupe de l'acide stéarique, de l'acide montanique, de glycéride de cire gras et molle, d'alcool de cire, d'ester de cire, d'ester d'un acide montanique, d'huile de ricin, d'acide palmitique.

2. Mine suivant la revendication 1,
**caractérisée en ce que**
elle contient de 5 % en poids à 20 % en poids de cire polyoléfinique.

3. Mine suivant la revendication 1 ou 2,
**caractérisée en ce que**
elle contient de 35 % en poids à 60 % en poids de pigments.

4. Mine suivant l'une des revendications précédentes,
**caractérisée en ce que**
elle contient au moins une cire polyoléfinique choisie dans le groupe de la cire de polyéthylène, de la cire de polypropylène, de la cire de copolymère de polyéthylène et de polypropylène.

5. Mine suivant l'une des revendications précédentes,
**caractérisée en ce que**
elle contient comme pigment de l'oxyde de titane et/ou du lithopone.

6. Mine suivant l'une des revendications précédentes,
**caractérisée par**
au moins une charge choisie dans le groupe du kaolin, du carbonate de calcium, de la poudre de stéatite, du mica, du talc.
